# EUROPEAN PATENT SPECIFICATION

(11) **EP 1 910 132 B1**
(45) Date of publication and mention of the grant of the patent: **12.11.2008**
(21) Application number: 06783937.3
(22) Date of filing: 02.08.2006
(51) Int. Cl.: B60R 11/02

(54) **MOUNT FOR MOUNTING A DEVICE, SUCH AS A TELEPHONE CRADLE OR A NAVIGATION DEVICE, TO A SURFACE**
HALTERUNG ZUR BEFESTIGUNG EINER VORRICHTUNG, WIE ZUM BEISPIEL EINER TELEFONGABEL ODER EINER NAVIGATIONSVORRICHTUNG AN EINER FLÄCHE
SUPPORT CONCU POUR MONTER UN DISPOSITIF, TEL QU'UNE STATION D'ACCUEIL DE TELEPHONE OU UN DISPOSITIF DE NAVIGATION, SUR UNE SURFACE

(30) Priority: 02.08.2005 NL 1029660
(43) Date of publication of application: 16.04.2008
(73) Proprietor: TomTom International B.V., 1017 CT Amsterdam (NL)
(72) Inventor: RIDDIFORD, Martin, London NW1 6DE (GB); JACKSON, Andrew, London NW1 DE (GB)
(74) Representative: Denmark, James Christopher
(86) International application number: PCT/NL2006/050191
(87) International publication number: WO 2007/015641

(56) References cited:
- DE-U1-3202005 005 86
- GB-A- 1 044 398
- US-A- 4 043 531
- US-A- 6 130 790
- US-A- 6 142 432

## Description

### FIELD OF THE INVENTION

The present invention relates to a mount for mounting a device, such as a telephone cradle or a navigation device, to a surface, the surface having a normal in a first direction, the mount comprising:
- a connection member for connecting the device to the mount, the connection member being arranged to allow adjustment of the orientation of the device with respect to the mount,
- a suction cup arranged to be attached to the surface by generating underpressure in between the suction cup and the surface,
- a pull member arranged to pull a central part of the suction cup substantially in the first direction from a first position to a second position, thereby generating underpressure in between the suction cup and the surface,

Also, the present invention relates to a vehicle comprising such a mount and a method of mounting a device.

### STATE OF THE ART

Prior art navigation devices based on GPS (Global Positioning System) are well known and are widely employed as in-car navigation systems. Such a GPS based navigation device relates to a computing device which in a functional connection to an external (or internal) GPS receiver is capable of determining its global position. Moreover, the computing device is capable of determining a route between start and destination addresses, which can be input by a user of the computing device. Typically, the computing device is enabled by software for computing a "best" or "optimum" route between the start and destination address locations from a map database. A "best" or "optimum" route is determined on the basis of predetermined criteria and need not necessarily be the fastest or shortest route.

The navigation device may typically be mounted on the dashboard of a vehicle.

By using positional information derived from the GPS receiver, the computing device can determine at regular intervals its position and can display the current position of the vehicle to the user. The navigation device may also comprise memory devices for storing map data and a display for displaying a selected portion of the map data.

Also, it can provide instructions how to navigate the determined route by appropriate navigation directions displayed on the display and/or generated as audible signals from a speaker (e.g. 'turn left in 100 m'). Graphics depicting the actions to be accomplished (e.g. a left arrow indicating a left turn ahead) can be displayed in a status bar and also be superimposed upon the applicable junctions/turnings etc. in the map itself.

It is known to enable in-car navigation systems to allow the driver, whilst driving in a car along a route calculated by the navigation system, to initiate a route recalculation. This is useful where the vehicle is faced with construction work or heavy congestion.

It is also known to enable a user to choose the kind of route calculation algorithm deployed by the navigation device, selecting for example from a 'Normal' mode and a 'Fast' mode (which calculates the route in the shortest time, but does not explore as many alternative routes as the Normal mode).

It is also known to allow a route to be calculated with user defined criteria; for example, the user may prefer a scenic route to be calculated by the device. The device software would then calculate various routes and weigh more favourably those that include along their route the highest number of points of interest (known as POIs) tagged as being for example of scenic beauty.

Navigation devices are often used as in-car navigation systems. In order to allow safe and comfortable use of the navigation device inside a vehicle, the navigation device is usually positioned on a mount. Most cars do not have a built-in mount. Also, different users may prefer different positions to mount their navigation device.

Therefore, mounts are known from the prior art that can be positioned within a vehicle in accordance with the desires of the user.

Such mounts may comprise a suction cup that can be attached to a surface, such as a window. Between the suction cup and the window underpressure is created to stick the mount to the window. In order to do so, a shaft may be connected to the centre of the suction cup. The mount is further provided with a mechanism to pull the shaft and the centre of the suction cup away from the window. When the suction cup is held in a desired position, pressed against the window, the mechanism is applied to pull the shaft, and thus the centre of the suction cup, away from the window. The edge of the suction cup remains in contact with the window. This way, underpressure is created between the suction cup and the window. The shaft is fixed in its pulled-away position and the mount is fixed in position.

The user may thus freely choose where to position the mount. Also, the mount can be removed and/or repositioned easily.

Such mounts are often provided with a docking system to allow docking of the navigation device to the mount. To enable the user to freely change the orientation of the navigation device with respect to the mount, the docking system may comprise an articulation part or a ball joint as part of the connection between the navigation device and the mount. This allows the user to change the orientation of the navigation device in such a way that is most convenient and comfortable. When the navigation device is positioned in a desired position, the articulation or ball joint can be secured, for instance by tightening a screw.

Thus, after the mount has been fixed in position, the navigation device may be docked to the docking system. Next, the orientation of the navigation device with respect to the mount is adjusted as desired and fixed in that position.

So, in order to attach the mount to a surface and to fix the navigation device in a desired orientation, a number of actions need to be performed. Also, the mount comprises a relatively large number of parts.

### SHORT DESCRIPTION OF THE INVENTION

Therefore, it is an object of the invention to provide a mount that allows easy and simple attaching of the mount and adjusting of the orientation of the navigation device.

In order to obtain this object, the invention provides a mount according to the preamble, characterised in that in the second position, the pull member is arranged to exert a friction force to the connection member to fixate the connection member. This allows a user to attach the mount to a surface, and fixate the relative orientation of the device in one action.

According to an embodiment, an intermediate position is provided in between the first and the second position in which the suction cup is attached to the surface, while the connection member does exert a friction force to the connection member that is less than the friction force exerted in the second position. This allows a user to first position the mount and attach it to the surface by applying the pull member and then to orientate the device with respect to the mount, fixing it in position by further applying the pull member. The friction force exerted in the first and/or intermediate position is less than the friction force exerted in the second position. In the first and/or intermediate position, the friction force may be just enough to keep the device in a desired position for a relatively short time. However, in the first and/or intermediate position there may also be no friction force at all.

According to an embodiment, the mount comprises a moveable shaft connected to a central portion of the suction cup, the pull member being arranged to pull the moveable shaft from the first to the second position, where, in the second position, the moveable shaft is arranged to exert a friction force to the connection member to fixate it. This is an advantageous embodiment, as the moveable shaft is used for two functions: pulling up the suction cup and exerting the friction force.

According to an embodiment, the mount further comprises a central element having a hollow shaft arranged to receive the moveable shaft and allow movement of the moveable shaft with respect to the central element in the first direction from the first to the intermediate position.

According to an embodiment, the pull member is a rotational pull member, comprising at least one inclined surface, having an inclination bridging a distance in the first direction of at least the distance between the first and the second direction, the mount further comprising a rod positioned substantially in a direction perpendicular to the first direction, the rod being connected to the suction cup and is in contact with the at least one inclined surface such that, when the rotational pull member is rotated from the first to the second position, the rod is moved in the first direction pulling the suction cup from the first to the second position. This is an advantageous embodiment of the invention, as a rotational pull member is easy to use.

According to an embodiment, the at least one inclined surface is provided with a stop corresponding with the intermediate position, to hold the rod in the intermediate position. This helps the user to feel when the intermediate position is reached. It also keeps the rod from moving back to the first position.

According to an embodiment, the connection member is one of a ball joint, an articulated connection member.

According to a further aspect, the invention relates to a vehicle, comprising a mount according to the above.

According to a further aspect, the invention relates to a method for mounting a device, such as a telephone cradle or a navigation device, to a surface, the surface having a normal in a first direction, the mount comprising a suction cup (101), the method comprising:
- positioning the suction cup against the surface,
- applying a pull member to pull a central part of the suction cup substantially in the first direction from a first position to an intermediate position, thereby generating underpressure in between the suction cup and the surface,
- adjusting an orientation of the device with respect to the mount, the device being connected to the mount by an adjustable connection member, and
- applying the pull member to a second position to exert a friction force to the connection member to fixate it.

Such a method provides an easy way of attaching a mount and positioning the device relative to the mount. It

### SHORT DESCRIPTION OF THE DRAWINGS

Embodiments of the invention will now be described, by way of example only, with reference to the accompanying schematic drawings in which corresponding reference symbols indicate corresponding parts, and in which:
- Figure 1 schematically depicts a schematic block diagram of a navigation device,
- Figure 2 schematically depicts a schematic view of a navigation device,
- Figure 3 schematically depicts an embodiment of the screen mount according to the invention,
- Figure 4a and 4b schematically depict a side view of an embodiment of the invention,
- Figure 5a and 5b schematically depict perspective views of an embodiment of the invention, and
- Figure 6 schematically depicts a cross sectional view of a detail of an embodiment of the invention.

### DETAILED DESCRIPTION OF THE INVENTION

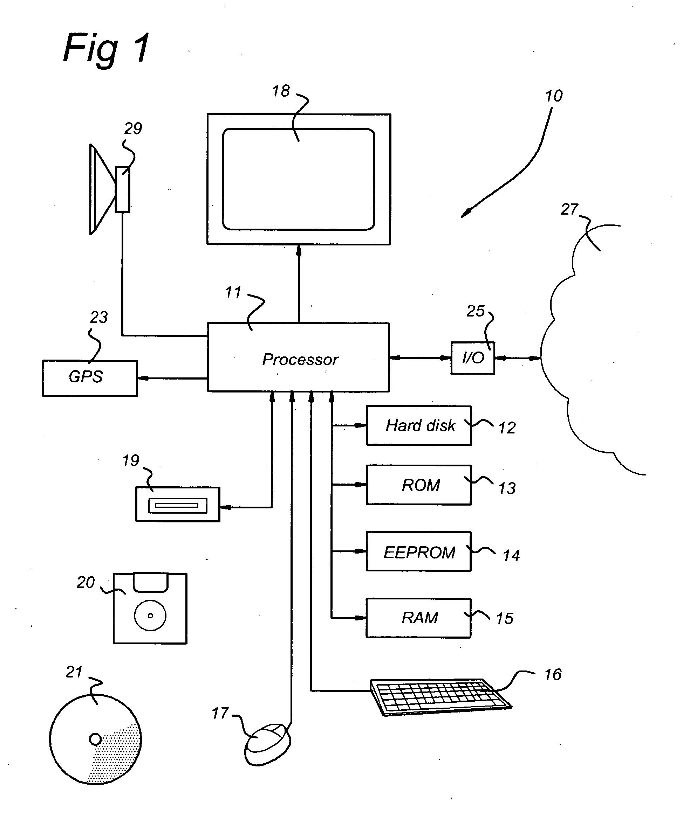

Figure 1 shows a schematic block diagram of an embodiment of a navigation device 10, comprising a processor unit 11 for performing arithmetical operations. The processor unit 11 is arranged to communicate with memory units that store instructions and data, such as a hard disk 12, a Read Only Memory (ROM) 13, Electrically Erasable Programmable Read Only Memory (EEPROM) 14 and a Random Access Memory (RAM) 15. The memory units may comprise map data. This map data may be two dimensional map data (latitude and longitude), but may also comprise a third dimensions (height). The map data may further comprise additional information such as information about petrol/gas stations, points of interest. The map data may also comprise information about the shape of buildings and objects along the road.

The processor unit 11 may also be arranged to communicate with one or more input devices, such as a keyboard 16 and a mouse 17. The keyboard 16 may for instance be a virtual keyboard, provided on a display 18, being a touch screen. The processor unit 11 may further be arranged to communicate with one or more output devices, such as a display 18, a speaker 29 and one or more reading units 19 to read for instance floppy disks 20 or CD ROM's 21. The display 18 could be a conventional computer display (e.g. LCD) or could be a projection type display, such as the head up type display used to project instrumentation data onto a car windscreen or windshield. The display 18 may also be a display arranged to function as a touch screen, which allows the user to input instructions and/or information by touching the display 18 with his finger.

The speaker 29 may be formed as part of the navigation device 10. In case the navigation device 10 is used as an in-car navigation device, the navigation device 10 may use speakers of the car radio, the board computer and the like.

The processor unit 11 may further be arranged to communicate with a positioning device 23, such as a GPS receiver, that provides information about the position of the navigation device 10. According to this embodiment, the positioning device 23 is a GPS based positioning device 23. However, it will be understood that the navigation device 10 may implement any kind of positioning sensing technology and is not limited to GPS. It can hence be implemented using other kinds of GNSS (global navigation satellite system) such as the European Galileo system. Equally, it is not limited to satellite based location/velocity systems but can equally be deployed using ground-based beacons or any other kind of system that enables the device to determine its geographical location.

However, it should be understood that there may be provided more and/or other memory units, input devices and read devices known to persons skilled in the art. Moreover, one or more of them may be physically located remote from the processor unit 11, if required. The processor unit 11 is shown as one box, however, it may comprise several processing units functioning in parallel or controlled by one main processor that may be located remote from one another, as is known to persons skilled in the art.

The navigation device 10 is shown as a computer system, but can be any signal processing system with analog and/or digital and/or software technology arranged to perform the functions discussed here. It will be understood that although the navigation device 10 is shown in Fig. 1 as a plurality of components, the navigation device 10 may be formed as a single device.

The navigation device 10 may use navigation software, such as navigation software from TomTom B.V. called Navigator. Navigator software may run on a touch screen (i.e. stylus controlled) Pocket PC powered PDA device, such as the Compaq iPaq, as well as devices that have an integral GPS receiver 23. The combined PDA and GPS receiver system is designed to be used as an in-vehicle navigation system. The invention may also be implemented in any other arrangement of navigation device 10, such as one with an integral GPS receiver/computer/display, or a device designed for non-vehicle use (e.g. for walkers) or vehicles other than cars (e.g. aircraft).

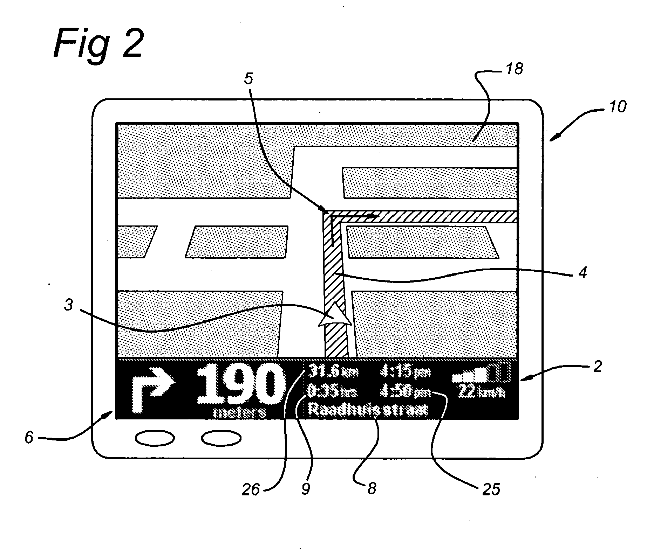

Figure 2 depicts a navigation device 10 as described above.

Navigator software, when running on the navigation device 10, causes a navigation device 10 to display a normal navigation mode screen at the display 18, as shown in Fig. 2. This view may provide driving instructions using a combination of text, symbols, voice guidance and a moving map. Key user interface elements are the following: a 3-D map occupies most of the screen. It is noted that the map may also be shown as a 2-D map.

The map shows the position of the navigation device 10 and its immediate surroundings, rotated in such a way that the direction in which the navigation device 10 is moving is always "up". Running across the bottom quarter of the screen may be a status bar 2. The current location of the navigation device 10 (as the navigation device 10 itself determines using conventional GPS location finding) and its orientation (as inferred from its direction of travel) is depicted by a position arrow 3. A route 4 calculated by the device (using route calculation algorithms stored in memory devices 11, 12, 13, 14, 15 as applied to map data stored in a map database in memory devices 11, 12, 13, 14, 15) is shown as darkened path. On the route 4, all major actions (e.g. turning corners, crossroads, roundabouts etc.) are schematically depicted by arrows 5 overlaying the route 4. The status bar 2 also includes at its left hand side a schematic icon depicting the next action 6 (here, a right turn). The status bar 2 also shows the distance to the next action (i.e. the right turn - here the distance is 50 meters) as extracted from a database of the entire route calculated by the device (i.e. a list of all roads and related actions defining the route to be taken). Status bar 2 also shows the name of the current road 8, the estimated time before arrival 9 (here 2 minutes and 40 seconds), the actual estimated arrival time 25 (11.36am) and the distance to the destination 26 (1.4Km). The status bar 2 may further show additional information, such as GPS signal strength in a mobile-phone style signal strength indicator.

As already mentioned above, the navigation device may comprise input devices, such as a touch screen, that allows the users to call up a navigation menu (not shown). From this menu, other navigation functions can be initiated or controlled. Allowing navigation functions to be selected from a menu screen that is itself very readily called up (e.g. one step away from the map display to the menu screen) greatly simplifies the user interaction and makes it faster and easier. The navigation menu includes the option for the user to input a destination.

The actual physical structure of the navigation device 10 itself may be fundamentally no different from any conventional handheld computer, other than the integral GPS receiver 23 or a GPS data feed from an external GPS receiver. Hence, memory devices 12, 13, 14, 15 store the route calculation algorithms, map database and user interface software; a processor unit 12 interprets and processes user input (e.g. using a touch screen to input the start and destination addresses and all other control inputs) and deploys the route calculation algorithms to calculate the optimal route. 'Optimal' may refer to criteria such as shortest time or shortest distance, or some other user-related factors.

More specifically, the user inputs his start position and required destination into the navigation software running on the navigation device 10, using the input devices provided, such as a touch screen 18, keyboard 16 etc. The user then selects the manner in which a travel route is calculated: various modes are offered, such as a 'fast' mode that calculates the route very rapidly, but the route might not be the shortest; a 'full' mode that looks at all possible routes and locates the shortest, but takes longer to calculate etc. Other options are possible, with a user defining a route that is scenic - e.g. passes the most POI (points of interest) marked as views of outstanding beauty, or passes the most POIs of possible interest to children or uses the fewest junctions etc.

Roads themselves are described in the map database that is part of navigation software (or is otherwise accessed by it) running on the navigation device 10 as lines - i.e. vectors (e.g. start point, end point, direction for a road, with an entire road being made up of many hundreds of such sections, each uniquely defined by start point/end point direction parameters). A map is then a set of such road vectors, plus points of interest (POIs), plus road names, plus other geographic features like park boundaries, river boundaries etc, all of which are defined in terms of vectors. All map features (e.g. road vectors, POIs etc.) are defined in a co-ordinate system that corresponds or relates to the GPS co-ordinate system, enabling a device's position as determined through a GPS system to be located onto the relevant road shown in a map.

Route calculation uses complex algorithms that are part of the navigation software. The algorithms are applied to score large numbers of potential different routes. The navigation software then evaluates them against the user defined criteria (or device defaults), such as a full mode scan, with scenic route, past museums, and no speed camera. The route which best meets the defined criteria is then calculated by the processor unit 11 and then stored in a database in the memory devices 12, 13, 14, 15 as a sequence of vectors, road names and actions to be done at vector end-points (e.g. corresponding to pre-determined distances along each road of the route, such as after 100 meters, turn left into street x).

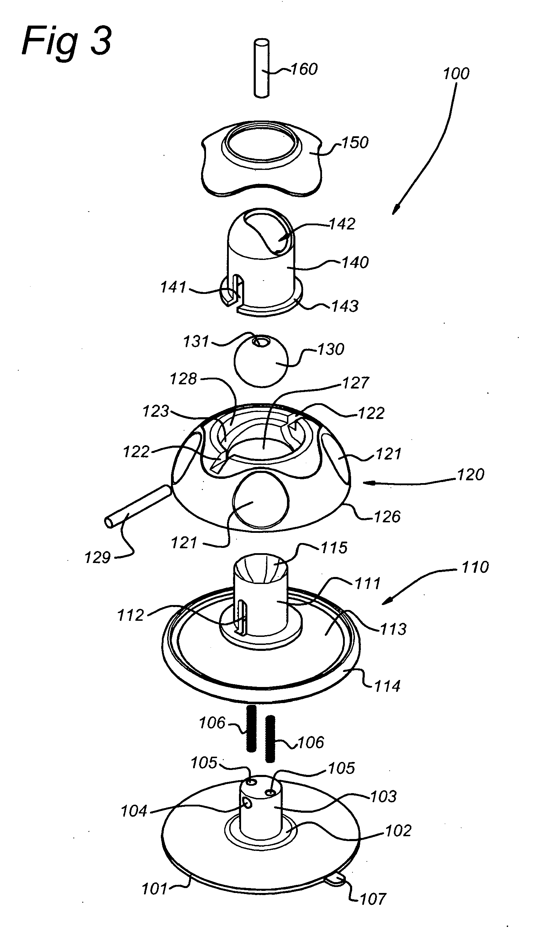

Fig. 3 depicts a mount according to an embodiment of the invention in a disassembled state. Fig. 3 depicts a suction cup 101, suitable for being attached to a surface, by generating an underpressure in between the suction cup 101 and the surface the suction cup 101 is to be attached to. The surface has a normal in a first direction.

This suction cup 101 is preferably made of a material having a resilience that makes it suitable for use as a suction cup, as will be understood by a skilled person. The suction cup 101 may for instance be made of rubber. At the outer edge of the suction cup 101 a lip 107 is provided that allows easy removal of the suction cup 101.

A moveable shaft 103 extending in the first direction is attached to the suction cup 101. This may for instance be done by means of a foot portion 102. The foot portion 102 may be formed as part of the moveable shaft 103 and glued to the suction cup 101. However, the moveable shaft 103 and the suction cup 101 may be connected with each other in any suitable manner, as will be understood by a skilled person.

As will be explained in more detail below, the moveable shaft 103 is arranged to be moved in the first direction from a first position to a second position, substantially parallel with the central axis of the moveable shaft 103. When the suction cup 101 is pressed against a surface it is to be attached to and the moveable shaft 103 is moved upwardly in the substantially first direction from the first position to the second position (i.e. away from the surface), the suction cup 101 is pulled up and underpressure is created between the suction cup 101 and the surface. When the suction cup 101 is moved down again from the second position to the first position (i.e. towards the surface), the suction cup 101 is pushed towards the surface and the underpressure is removed.

The moveable shaft 103 is provided with an aperture 104, extending in a second direction being substantially perpendicular with respect to the first direction (i.e. perpendicular with respect to the central body axis of the moveable shaft 103). Although not shown in Fig. 3 the aperture extends all the way through the moveable shaft 103.

Further, the moveable shaft 103 is provided with a first and a second spring aperture 105 extending in the first direction being substantially parallel to the central axis of the moveable shaft 103. The first and second spring apertures 105 are arranged to receive first and second spring elements 106.

The mount 100 further comprises a central element 110, comprising a disc-shaped member 113 and a hollow shaft 111 positioned at the centre of the disc-shaped member 113. The hollow shaft 111 is arranged to receive the moveable shaft 103 and allows the moveable shaft 103 to move up and down in the hollow shaft 111. The upper end of the central element 110 has a hollow recess 115 formed therein. This hollow recess is arranged to receive a ball element 130 as will be explained below.

The hollow shaft 111 is further provided with two elongated openings 112. Only one of the two elongated openings 112 is shown in Fig. 3. A second elongated opening 112 is provided in the hollow shaft 111 opposing the first elongated opening 112.

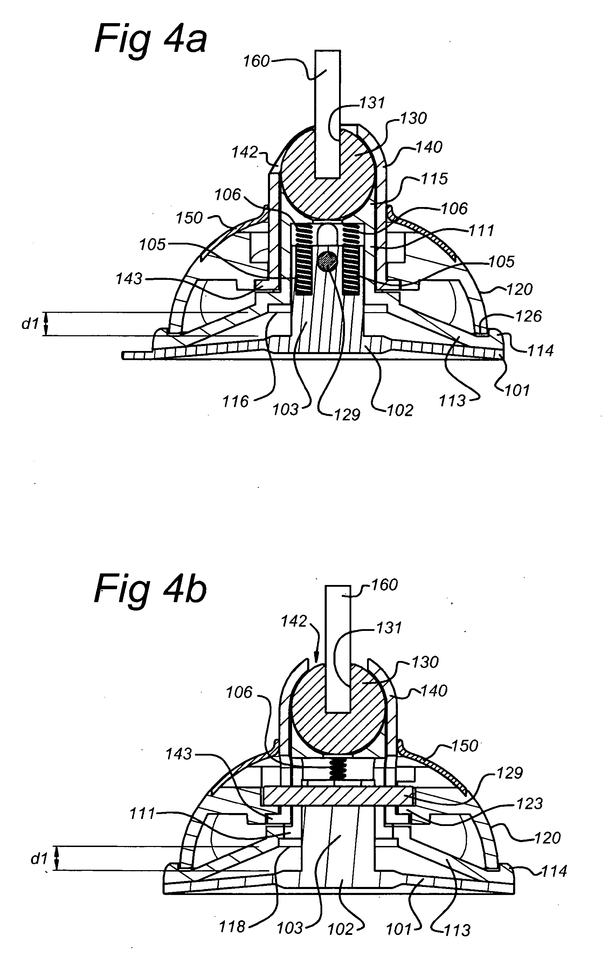

Although not clearly visible in Fig. 3, the disc-shaped member 113 has a concave shape that is arranged to receive the suction cup 101 and allows the suction cup to be moved in the first direction from the first to the second position within the concavity. Along the periphery of the disc-shaped member 113 is a rim 114. In use rim 114 is pressed against the outer edge of the suction cup 101 and prevents the outer edge from moving. This is more clearly visible in figures 4a and 4b.

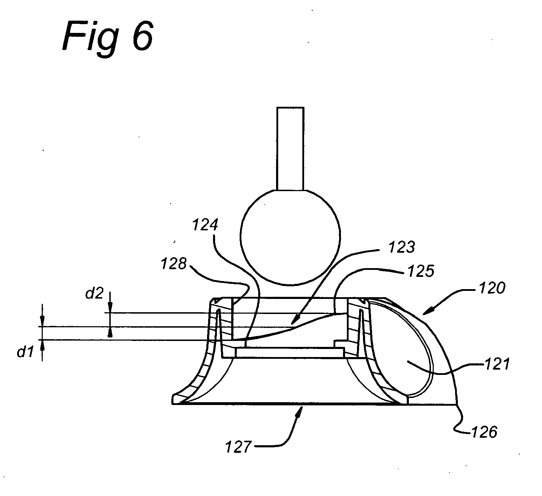

Furthermore, a pull member 120 is provided as part of the mount 100. The pull member 120 has a circular edge 126 that tightly fits the rim 114 of the central element 110. In the central part of the pull member 120 an aperture 127 is formed, extending in the first direction, the aperture being arranged to receive the hollow shaft 111. Along the inside wall 128 of the aperture 127 are first and second inclined drive surfaces 123, of which only one is clearly visible in Fig. 3. Both inclined drive surfaces 123 have a lower part 124 and an upper part 125. These are indicated in Fig. 6, which will be explained below. The lower part 124 of the inclined drive surface 123 is the part of the inclined drive surface 123 that, in an assembled state, is closest to the suction cup 101. The upper part 125 of the inclined drive surface 123 is the part of the inclined drive surface 123 that, in an assembled state, is furthest removed from the suction cup 101. The inclined surface 123 bridges a distance in the first direction at least equal to the distance between the first and second position.

The pull member 120 is further provided with two grooves 122 being positioned opposite each other along the upper circular edge of the pull member 120. The two grooves are arranged to receive a rod 129, as will be explained below.

At the outside wall of the pull member 120 a plurality of indentations 121 are provided. In use, the pull member 120 is arranged to be rotated with respect to the rest of the mount 100. This rotation is applied by a user by hand. The indentations 121 are provided to give a user enough grip to perform the rotary movement. It will be understood by a skilled person that any other suitable way of providing grip could be used instead.

The mount 100 further comprises a ball cover 140 to keep the ball element 130 in position. The ball cover 140 is also provided with two grooves 141, of which only one is visible in Fig. 3. The other groove 141 is positioned opposite with respect to the first groove 141. The upper part of the ball cover 140 is roundly shaped to receive the ball element 130 and to allow the ball element 130 to be rotated with respect to the ball cover 140.

In use, a navigation device 10 is attached to the mount 100. According to Fig. 3, this may be done by attaching a rod 160 to the ball element 130. In order to attach the rod 160 to the ball element 130, the ball element 130 may be provided with a screw hole, arranged to receive an end portion of the rod 160 being provided with a screw thread (not shown). However, it will be understood by a skilled person that any other suitable way of attaching the navigation device 10 to the ball element 130 may be used.

The upper part of the ball cover 140 is provided with an opening 142 to give the rod 160 freedom of movement in a predetermined angular range. Since the ball cover 140 also needs to keep the ball element 130 in position, opening 142 may not be too wide, to prevent the ball element 130 from escaping.

The mount 100 may further comprise a cap 150. Cap 150 is arranged to be positioned against pull member 120. The main function of cap 150 is to prevent rod 129 from escaping.

When assembling the mount 100, first springs 106 are put inside the spring apertures 105. Next, the moveable shaft 103 is positioned inside the hollow shaft 111 of the central element 110. Ball element 130 is put inside the ball cover 140 and pull member 120 is put around the ball cover 140. Ball cover 140 is provided with a rim 143 to keep the ball cover in position. In a next step, pull member 120 and ball cover 140 are put on top of the suction cup 101 and central element 110, such that circular edge 126 tightly fits rim 114 of the central element 110. By doing this, ball element 130 is locked in position.

When all the above elements are put in place, one has to make sure that aperture 104, elongated openings 112, grooves 122 and grooves 141 are all in line with respect to each other to allow positioning of rod 129.

In a next step, rod 129 can be put in position, by sliding it through aperture 104, elongated openings 112, grooves 122 and grooves 141. The length of the rod 129 is chosen such that the ends of the rod 129 are in contact with the inclined drive surface 123 and abut the inner wall 128.

Finally, connection rod 160 may be attached to the ball element 130 and cap 150 can be put in position.

Figures 4a and 4b schematically depict a mount 100 in an assembled state. Fig. 4a depicts a cross sectional view of the mount in a first direction, while Fig. 4b depicts a cross sectional view of the mount in a second direction, being substantially perpendicular with respect to the first direction. Fig. 4a and 4b also indicate a distance d₁ and d₂. As will be explained in more detail below, the suction cup 101 can be moved in the first direction from a first to a second position. This distance is indicated with d₂. In between the first and second position, an intermediate position is provided, indicated with d₁.

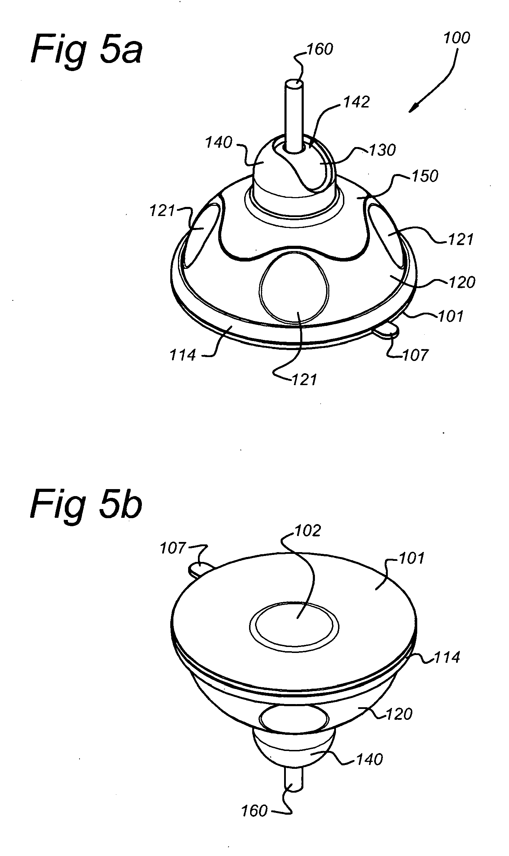

Figures 5a and 5b schematically show a perspective view of the mount in an assembled state. Fig. 5a depicts connection rod 160 being connected to ball element 130. Ball cover 140 covers ball element 130 to keep it locked in position. The opening 142 is shaped in such away that rod 160 can be positioned with respect to the rest of the mount 100 over an angle of at least 90° in at least one direction. If a user wants to position the rod 129 with respect to the mount 100 in another direction, not allowed by the opening 142, the user may simply change the rotational orientation of the mount 100.

Furthermore, Fig. 5a and 5b show that pull member 120 tightly fits rim 114 and rim 114 is in contact with the outer edge of the suction cup 101. Lip 107 extends beyond rim 114 to allow easy lifting of the suction cup 101 from the surface it is attached to, to remove the underpressure.

Fig. 6 shows a partial cross sectional view of pull member 120. Fig. 6 shows aperture 127 extending through the pull member 120, arranged to receive ball cover 140 (not shown in Fig. 6) as explained above. At the inside wall 128 one of the two inclined drive surfaces 123 is shown. The lower part 124 and the upper part 125 of the inclined drive surface, as already mentioned above are indicated in Fig. 6.

Next the functioning of the mount 100 will be discussed.

In order to fix the mount 100 the suction cup 101 is pressed against a suitable surface, for instance a window. All elements of the mount 100 are all orientated in such away with respect to each other, that aperture 104, elongated openings 112, grooves 122 and grooves 141 are all in line with respect to each other. The ends of the rod 129 are both in contact with the respective lower parts 124 of the inclined drive surface. The moveable shaft 103 is in its lower position with respect to the hollow shaft 111.

Next, pull member 120 is rotated. According to the embodiment shown in the figures, the pull member 120 is rotated in a counter clockwise direction. However, it will be understood that the mount 100 may also be designed such that the pull member 120 needs to be rotated in a clockwise direction. The suction cup 101, the central element 110, as well as the ball cover 140 all prevent rod 129 from rotating. Thus, pull member 120 is the only part rotating.

As a result, rod 129 is pushed upwards by the inclined drive surface 123, i.e. away from the surface it is to be attached to. Together with rod 129, the moveable shaft 103 is pulled in the first direction away from the first position by rod 129. Note that rod 129 is free to travel through elongated openings 112 and grooves 141, as they have an elongated shape. Thus, central element 110, pull member 120, ball cover 140 all remain in position, i.e. neither rotate nor move upwardly.

It will be understood that as a result of the upward movement of the moveable shaft 103, the foot portion 102 and the suction cup 101 are pulled upwardly, creating an underpressure between the suction cup 101 and the surface the mount is attached to. From Fig. 4a and 4b it can be seen that the foot portion 102 can only travel upwardly in the first direction with respect to the central element 110 over a distance d₁, i.e. from the first position to an intermediate position. The upward movement of the suction cup 101 is limited as by a stop 116, formed as part of the central element 110.

However, Fig. 6 shows that the total height difference bridged by the inclined surface 12 equals d₂, where d₂ > d₁, d₂ being at least the distance from the first position to the second position. Thus, when the pull member 120 is rotated over an angle of, for instance, 90°, the rod 129 is halfway the inclined surface 123, underpressure is created between the suction cup 101 and the surface the mount is to be attached to. Foot portion 102 is in contact with stop 116.

Pull member 120 may however be rotated even further. As a result, suction cup 101, moveable shaft 103 and central element 110 are pulled further up in the first direction together, pressing ball element 130 against ball cover 140. By doing this, ball element 130 is fixed in position, preventing it from rotating.

By rotating pull member 120, the suction cup 101 is lifted from the first position to the second position, thereby creating underpressure between the suction cup and the surface the mount is to be attached to. It is noted however that the freedom of movement in the first direction of the suction cup 101 with respect to the central element 110 is limited to a distance d₁ that is smaller than the distance d₂ between the first and second position. Thus, the first part of the rotation pulls up suction cup 101, until suction cup 101 1 is stopped by stop 116 in an intermediate position, being in between the first and second position, thereby creating underpressure. When the rotation is continued, and the suction cup 101 is pulled up further from the intermediate position to the second position, the suction cup 101 together with the central element 110 are pulled up and exert a force to the ball element, fixing it in position.

A user that wants to install mount 100 may first press mount 100 against a desired position of a surface, for instance a window, pull the suction cup 101 in the intermediate position by rotating pull member 120 to fix the mount to the surface, then position ball element 130 and connection rod 160 and finally rotate pull member 120 even further to position the suction cup in the second position, in which it fixes the ball element 130 in position. This way, two actions, i.e. mounting of the mount 100 and positioning navigation device 10, may be done in one simple action, i.e. rotation of the pull member 120.

The basic principle of the embodiment described above is that both the suction cup and the ball element 130 are controlled in one action, i.e. rotating the pull member 120. The pull member 120 is used to pull up the suction cup 101 and to fix the ball element 130 in position. The pull member 120 pulls up the suction member 101 in a first direction, i.e. parallel to the normal of the surface the mount is to be attached to.

The pull member 120 is thus arranged to pull a central part of the suction cup substantially in the first direction from a first position to a second position, the second position being further removed from the surface the mount is to be attached to than the first position, where in the second position, the pull member 120 exerts a force to the ball element 130 to fix it. Of course, the pull member 120 does not need to exert this force directly to the ball element 130, but may also exert this force via other components, such via rod 129, and central element 110.

In between the first and second position, an intermediate position may exist, in which suction cup 101 is attached to the surface (i.e. enough underpressure is generated) and in which the ball element 130 is not fixed yet.

According to a further embodiment, the inclined surface 123 may be provided with a stop at the higher part of the inclined surface 123. This stop may be provided to prevent the pull member 120 from being rotated too far.

The inclined surface 123 may further have all kinds of shapes. For instance, the lower part of the inclined surface 124 (see Fig. 6), may have a different slope than the higher part of the inclined surface 125. This may be done to give a user some feedback by maintaining a relatively equal torque during rotation. It may also be used to give the user feedback such that the user feels when the first, intermediate and/or second position is reached.

Also, inclined surface 123 may have a stop, for instance a flat part (not shown), or a recession/indentation in between lower part 124 and higher part 125. Such a stop may be formed for holding the rod 129 in the intermediate position and preventing the pull member from moving back to the first position.

Applying the pull member 120 in the reverse direction first loosens the ball element 130 and next, removes the underpressure in between the suction cup 101 and the surface, as will be understood. Rotating the pull member 120 in the reverse direction, first the moveable shaft and the central element 110 move back from the second to the intermediate position. When the pull member 120 is rotated even further in the reverse direction, the suction cup and the moveable shaft move from the intermediate position to the first direction with respect to the central element 110.

In order to facilitate this reverse movement from the intermediate position to the first position, springs 106 are provided to push down the moveable shaft 103 and the suction cup 101 towards the surface with respect to the central element 110.

It will be understood that in stead of springs 106, other measures could be applied to facilitate the reverse movement. For instance, a second inclined surface could be provided, facing and following the first inclined surface 123. The rod 129 is then captured in between these two inclined surfaces. The second inclined surface is then provided to push back the rod 129 when the pull member 120 is applied in the reverse direction.

The springs 106 may also create a friction force on the ball element 130 when the suction cup 101 is in the first and/or intermediate position. If no friction is present in the first and/or intermediate position, the mount 100 would be impractical and difficult to handle and it would be difficult to mount a device, such as a navigation device 10, to the mount 100, before attaching it to a desired surface.

So, the friction force in the first and intermediate position is less than the friction force in the second position. Of course, the friction force in the first and/or intermediate position may be zero.

According to the above embodiment, a device, such as a telephone cradle or a navigation device 10 is attached to the mount by using a ball joint, comprising a ball element 130 and a connection rod 160. It will however be understood that many other types of connections may be used. In fact, any kind of connection member that is arranged to allow relative positioning of e.g. the navigation with respect to the mount may be used, such as for instance an articulated connection member.

According to the above embodiment, the pull member 120 is a rotational member, however, it will be understood that also alternative pull members may be used. For instance, pull members may be used that use a parallel motion to pull suction cup 101 instead of rotational motion. Such alternatives are known from the prior art.

While specific embodiments of the invention have been described above, it will be appreciated that the invention may be practiced otherwise than as described. It will be understood by a skilled person that all software components may also be formed as hardware components.

The descriptions above are intended to be illustrative, not limiting. Thus, it will be apparent to one skilled in the art that modifications may be made to the invention as described without departing from the scope of the claims set out below.

## Claims

1. Mount for mounting a device, such as a telephone cradle or a navigation device, to a surface, the surface having a normal in a first direction, the mount comprising:
- a connection member (130, 160) for connecting the device to the mount, the connection member (130, 160) being arranged to allow adjustment of the orientation of the device with respect to the mount,
- a suction cup (101) arranged to be attached to the surface by generating underpressure in between the suction cup (101) and the surface,
- a pull member (120) arranged to pull a central part of the suction cup (101) substantially in the first direction from a first position to a second position, thereby generating underpressure in between the suction cup (101) and the surface, **characterised in that** in the second position, the pull member (120) is arranged to exert a friction force to the connection member (130, 160) to fixate the connection member (130, 160).

2. Mount according to claim 1, wherein an intermediate position is provided in between the first and the second position in which the suction cup is attached to the surface, while the connection member (130, 160) does exert a friction force to the connection member (130, 160) that is less than the friction force exerted in the second position.

3. Mount according to any one of the preceding claims, comprising a moveable shaft (103) connected to a central portion of the suction cup (101), the pull member being arranged to pull the moveable shaft from the first to the second position, where, in the second position, the moveable shaft (103) is arranged to exert a friction force to the connection member (130, 160) to fixate it.

4. Mount according to claim 2 - 3, further comprising a central element (110) having a hollow shaft (111) arranged to receive the moveable shaft (103) and allow movement of the moveable shaft with respect to the central element in the first direction from the first to the intermediate position.

5. Mount according to any one of the preceding claims, wherein the pull member is a rotational pull member, comprising at least one inclined surface (123), having an inclination bridging a distance in the first direction of at least the distance between the first and the second direction,
the mount further comprising a rod (129) positioned substantially in a direction perpendicular to the first direction, the rod (129) being connected to the suction cup (101) and is in contact with the at least one inclined surface (123) such that, when the rotational pull member (120) is rotated from the first to the second position, the rod (129) is moved in the first direction pulling the suction cup (101) from the first to the second position.

6. Mount according to claim 5, wherein the at least one inclined surface (123) is provided with a stop corresponding with the intermediate position, to hold the rod (129) in the intermediate position.

7. Mount according to any one of the preceding claims, wherein the connection member (130, 160) is one of a ball joint, an articulated connection member.

8. Vehicle, comprising a mount according to any one of the preceding claims.

9. Method for mounting a device, such as a telephone cradle or a navigation device, to a surface, the surface having a normal in a first direction, the mount comprising a suction cup (101),
the method comprising:
- positioning the suction cup (101) against the surface,
- applying a pull member to pull a central part of the suction cup (101) substantially in the first direction from a first position to an intermediate position, thereby generating underpressure in between the suction cup (101) and the surface,
- adjusting an orientation of the device with respect to the mount, the device being connected to the mount by an adjustable connection member (130, 160), and
- applying the pull member to a second position to exert a friction force to the connection member (130, 160) to fixate it.

## Patentansprüche

1. Halterung zum Montieren einer Vorrichtung wie zum Beispiel einer Telefongabel oder einer Navigationsvorrichtung auf einer Oberfläche, wobei die Oberfläche eine Normale in einer ersten Richtung hat, wobei die Halterung Folgendes umfasst:
- ein Verbindungselement (130, 160) zum Verbinden der Vorrichtung mit der Halterung, wobei das Verbindungselement (130, 160) so ausgelegt ist, dass es ein Justieren der Orientierung der Vorrichtung in Bezug auf die Halterung zulässt,
- einen Saugnapf (101) zum Anbringen auf der Oberfläche, indem Unterdruck zwischen dem Saugnapf (101) und der Oberfläche erzeugt wird,
- ein Ziehelement (120) zum Ziehen eines mittleren Teils des Saugnapfes (101) im Wesentlichen in der ersten Richtung von einer ersten Position in eine zweite Position, um **dadurch** Unterdruck zwischen dem Saugnapf (101) und der Oberfläche zu erzeugen, **dadurch gekennzeichnet, dass** in der zweiten Position das Ziehelement (120) so angeordnet ist, dass es eine Reibungskraft auf das Verbindungselement (130, 160) ausübt, um das Verbindungselement (130, 160) zu fixieren.

2. Halterung nach Anspruch 1, wobei eine Zwischenposition zwischen der ersten und der zweiten Position vorgesehen ist, in der der Saugnapf auf der Oberfläche angebracht ist, während das Verbindungselement (130, 160) eine Reibungskraft auf das Verbindungselement (130, 160) ausübt, die geringer ist als die in der zweiten Position ausgeübte Reibungskraft.

3. Halterung nach einem der vorherigen Ansprüche, die einen beweglichen Schaft (103) umfasst, der mit einem mittleren Abschnitt des Saugnapfes (101) verbunden ist, wobei das Ziehelement zum Ziehen des beweglichen Schaftes von der ersten in die zweite Position ausgelegt ist, wobei in der zweiten Position der bewegliche Schaft (103) die Aufgabe hat, eine Reibungskraft auf das Verbindungselement (130, 160) auszuüben, um es zu fixieren.

4. Halterung nach Anspruch 2-3, die ferner ein mittleres Element (110) mit einer Hohlwelle (111) umfasst, die den beweglichen Schaft (103) aufnimmt und eine Bewegung des beweglichen Schafts mit Bezug auf das mittlere Element in der Richtung von der ersten Position in die Zwischenposition zulässt.

5. Halterung nach einem der vorherigen Ansprüche, wobei das Ziehelement ein Rotationsziehelement ist, das wenigstens eine geneigte Fläche (123) mit einer Neigung umfasst, die eine Distanz in der ersten Richtung von wenigstens der Distanz zwischen der ersten und der zweiten Richtung überbrückt,
wobei die Halterung ferner einen Stab (129) umfasst, der im Wesentlichen in einer Richtung lotrecht zur ersten Richtung positioniert ist, wobei der Stab (129) mit dem Saugnapf (101) verbunden und mit der wenigstens einen geneigten Fläche (123) in Kontakt ist, so dass, wenn das Rotationsziehelement (120) von der ersten in die zweite Position gedreht wird, der Stab (129) in der ersten Richtung bewegt wird, so dass der Saugnapf (101) von der ersten in die zweite Position gezogen wird.

6. Halterung nach Anspruch 5, wobei die wenigstens eine geneigte Fläche (123) mit einem Anschlag versehen ist, der der Zwischenposition entspricht, um den Stab (129) in der Zwischenposition zu halten.

7. Halterung nach einem der vorherigen Ansprüche, wobei das Verbindungselement (130, 160) eines mit einem Kugelgelenk ist, ein gelenkartiges, Verbindungselement.

8. Fahrzeug, das eine Halterung nach einem der vorherigen Ansprüche umfasst.

9. Verfahren zum Montieren einer Vorrichtung wie zum Beispiel einer Telefongabel oder einer Navigationsvorrichtung auf einer Oberfläche, wobei die Oberfläche eine Normale in einer ersten Richtung hat, wobei die Halterung einen Saugnapf (101) umfasst,
wobei das Verfahren die folgenden Schritte beinhaltet:
- Positionieren des Saugnapfes (101) auf der Oberfläche,
- Anwenden eines Ziehelementes, um einen mittleren Teil des Saugnapfes (101) im Wesentlichen in der ersten Richtung von einer ersten Position in eine Zwischenposition zu ziehen, um **dadurch** Unterdruck zwischen dem Saugnapf (101) und der Oberfläche zu erzeugen,
- Justieren einer Orientierung der Vorrichtung mit Bezug auf die Halterung, wobei die Vorrichtung durch ein justierbares Verbindungselement (130, 160) mit der Halterung verbunden ist, und
- Anwenden des Ziehelementes auf eine zweite Position, um eine Reibungskraft auf das Verbindungselement (130, 160) auszuüben, um es zu fixieren.

## Revendications

1. Monture servant au montage d'un dispositif, par exemple un support de téléphone ou un dispositif de navigation, sur une surface, la surface ayant une perpendiculaire dans un premier sens, la monture comprenant :
- un élément de raccordement (130, 160) pour raccorder le dispositif à la monture, l'élément de raccordement (130, 160) étant agencé pour permettre le réglage de l'orientation du dispositif par rapport à la monture,
- une ventouse (101) qui est agencée pour être attachée à la surface grâce à la génération d'une dépression entre la ventouse (101) et la surface,
- un élément de traction (120) qui est agencé pour tirer une partie centrale de la ventouse (101) sensiblement dans le premier sens à partir d'une première position vers une deuxième position, ce qui génère par conséquent une dépression entre la ventouse (101) et la surface,
**caractérisée en ce que,** dans la deuxième position, l'élément de traction (120) est agencé pour exercer une force de friction sur l'élément de raccordement (130, 160) afin de fixer l'élément de raccordement (130, 160).

2. Monture selon la revendication 1, une position intermédiaire étant prévue entre la première position et la deuxième position dans laquelle la ventouse est attachée à la surface, pendant que l'élément de raccordement (130, 160) exerce effectivement une force de friction sur l'élément de raccordement (130, 160) laquelle est inférieure à la force de friction exercée dans la deuxième position.

3. Monture selon l'une quelconque des revendications précédentes, comprenant un axe mobile (103) lequel est raccordé à une partie centrale de la ventouse (101), l'élément de traction étant agencé pour tirer l'axe mobile à partir de la première position vers la deuxième position, où, dans la deuxième position, l'axe mobile (103) est agencé pour exercer une force de friction sur l'élément de raccordement (130, 160) afin de le fixer.

4. Monture selon les revendications 2 à 3, comprenant en outre un élément central (110) avec un axe creux (111) lequel est agencé pour recevoir l'axe mobile (103) et pour permettre le mouvement de l'axe mobile par rapport à l'élément central dans le premier sens, à partir de la première position vers la position intermédiaire.

5. Monture selon l'une quelconque des revendications précédentes, l'élément de traction étant un élément de traction rotatif comportant au moins une surface inclinée (123) dont l'inclinaison enjambe une distance dans le premier sens correspondant au moins à la distance entre le premier sens et le deuxième sens,
la monture comprenant en outre une tige (129) qui est sensiblement positionnée dans un sens perpendiculaire au premier sens, la tige (129) étant raccordée à la ventouse (101) et étant en contact avec ladite au moins une surface inclinée (123) de sorte que, lorsque l'élément de traction rotatif (120) est tourné à partir de la première position vers la deuxième position, la tige (129) est déplacée dans le premier sens ce qui a pour effet de tirer la ventouse (101) à partir de la première position vers la deuxième position.

6. Monture selon la revendication 5, ladite au moins une surface inclinée (123) étant pourvue d'une butée laquelle correspond à la position intermédiaire, afin de maintenir la tige (129) dans la position intermédiaire.

7. Monture selon l'une quelconque des revendications précédentes, l'élément de raccordement (130, 160) étant l'un des postes suivants : un joint à rotule, un élément de raccordement articulé.

8. Véhicule comportant une monture selon l'une quelconque des revendications précédentes.

9. Procédé pour monter un dispositif, par exemple un support de téléphone ou un dispositif de navigation, sur une surface, la surface ayant une perpendiculaire dans un premier sens, la monture comprenant une ventouse (101),
le procédé comprenant :
- l'action consistant à positionner la ventouse (101) contre la surface,
- l'application d'un élément de traction afin de tirer une partie centrale de la ventouse (101) sensiblement dans le premier sens à partir d'une première position vers une position intermédiaire, ce qui génère par conséquent une dépression entre la ventouse (101) et la surface,
- le réglage de l'orientation du dispositif par rapport à la monture, le dispositif étant raccordé à la monture par l'intermédiaire d'un élément de raccordement réglable (130, 160) et
- l'action consistant à appliquer l'élément de traction sur une deuxième position afin d'exercer une force de friction sur l'élément de raccordement (130, 160) afin de le fixer.
